# EUROPÄISCHE PATENTSCHRIFT

(11) **EP 2 859 613 B1**
(45) Veröffentlichungstag und Bekanntmachung des Hinweises auf die Patenterteilung: **27.04.2016**
(21) Anmeldenummer: 13728721.5
(22) Anmeldetag: 11.06.2013
(51) Int. Cl.: H01M 10/38, H01M 10/42, H01M 10/39, H01M 2/16

(54) **ELEKTRODENEINHEIT**
ELECTRODE UNIT
UNITÉ D'ÉLECTRODES

(30) Priorität: 11.06.2012 EP 12171490; 11.06.2012 US 201261657915 P
(43) Veröffentlichungstag der Anmeldung: 15.04.2015
(73) Patentinhaber: BASF SE, 67056 Ludwigshafen am Rhein (DE)
(72) Erfinder: HUBER, Günther, 67071 Ludwigshafen (DE); ZERPA UNDA, Jesus Enrique, 68519 Viernheim (DE); LUTZ, Michael, 67346 Speyer (DE); HEIDEBRECHT, Peter, 67346 Speyer (DE); BAYER, Domnik, Heidelberg 69121 (BW); JABCZYNSKI, Wolfgang, 67482 Venningen (DE); DÜRR, Anna Katharina, 67061 Ludwigshafen (DE); FREITAG, Katrin, 67065 Ludwigshafen (DE)
(74) Vertreter: BASF IP Association
(86) Internationale Anmeldenummer: PCT/EP2013/062034
(87) Internationale Veröffentlichungsnummer: WO 2013/186213

(56) Entgegenhaltungen:
- EP-A1- 0 213 828
- JP-A- 10 270 073
- JP-A- H08 329 981

## Beschreibung

Die Erfindung betrifft eine Elektrodeneinheit für eine elektrochemische Vorrichtung, umfassend einen Festelektrolyt sowie eine poröse Elektrode, wobei der Festelektrolyt einen Raum für Kathodenmaterial und einen Raum für Anodenmaterial trennt und die poröse Elektrode flächig mit dem Festelektrolyten verbunden ist und das Kathodenmaterial beim Laden oder Entladen entlang der Elektrode strömt.

Elektrochemische Vorrichtungen können zum Beispiel eingesetzt werden, um elektrische Energie zu speichern. Diese werden im Allgemeinen als Batterie oder Akkumulator bezeichnet. Andere elektrochemische Vorrichtungen sind zum Beispiel Elektrolysezellen. Diese können beispielsweise zur Herstellung von Alkalimetallen aus geeigneten Alkalimetalle enthaltenden Salzen eingesetzt werden.

Die Erzeugung elektrischer Energie ist im Falle fossiler Kraftwerke mit der Erzeugung von CO₂ verbunden und hat damit erheblichen Einfluss auf den Treibhauseffekt. Energieerzeugung auf Basis regenerativer Energieträger, zum Beispiel Wind, Sonne, Geothermie oder Wasserkraft vermeidet diesen Nachteil. Diese regenerativen Energieträger sind zeitlich jedoch nicht beliebig lastganggerecht verfügbar. Außerdem differiert gegebenenfalls der Standort der Energieerzeugung vom Ort des Energiebedarfs. Um diesen systembedingten Nachteil zu kompensieren, ist eine Speicherung, Pufferung und gegebenenfalls auch ein Transport der erzeugten Energie erforderlich.

Ein ausschließlich auf erneuerbaren Energien basierendes und dennoch stabiles Stromnetz kann es unter diesen Rahmenbedingungen nicht geben. Daher besteht Bedarf, diese Schwankungen durch kostengünstige und energieeffiziente Systeme mit einem hohen Wirkungsgrad auszugleichen und zu puffern.

Zur Speicherung elektrischer Energie werden derzeit im technischen Maßstab Pumpspeicherkraftwerke verwendet, in denen die potentielle Energie der geodätischen Höhendifferenz des Wassers zur Umwandlung in Strom genutzt wird. Der Aufbau solcher Pumpspeicherkraftwerke ist jedoch durch landschaftliche und ökologische Rahmenbedingungen limitiert. Druckspeicherkraftwerke, in denen die Kompression von Luft zur Energiespeicherung genutzt wird, sind aufgrund ihres vergleichsweise geringen Wirkungsgrades limitiert. Auch andere Formen der Energiespeicherung wie Superkondensatoren oder Schwungräder adressieren andere Zielmärkte, insbesondere Kurzzeitspeicher. Eine effektive Speicherung elektrischer Energie ist insbesondere mit Batterien möglich, die in verschiedenen Konzepten technisch realisiert wurden. Hierbei ist es insbesondere notwendig, Batterien einzusetzen, die wiederaufladbar sind.

Entsprechende. Batterien, die auf Basis eines geschmolzenen Alkalimetalls als Anode und einem kathodischen Reaktionsteilnehmer, im Allgemeinen Schwefel, arbeiten, sind zum Beispiel in DE-A 26 35 900 oder DE-A 26 10 222 bekannt. Hierbei werden das geschmolzene Alkalimetall und der kathodische Reaktionsteilnehmer durch einen für Kationen durchlässigen Festelektrolyten getrennt. An der Kathode erfolgt eine Reaktion des Alkalimetalls mit dem kathodischen Reaktionsteilnehmer. Dies ist zum Beispiel bei Einsatz von Natrium als Alkalimetall und Schwefel als kathodischem Reaktionsteilnehmer die Reaktion von Natrium und Schwefel zu Natriumpolysulfid. Zum Laden der Batterie wird das Natriumpolysulfid an der Elektrode durch Aufbringen elektrischer Energie wieder in Natrium und Schwefel getrennt.

Zur Vergrößerung der Speicherfähigkeit von Batterien auf Basis von einem geschmolzenen Alkalimetall und einem kathodischen Reaktionsteilnehmer werden Batterien eingesetzt, bei denen durch zusätzliche Vorratsbehälter die Menge an den eingesetzten Reaktanden vergrößert wird. Zum Entladen wird das flüssige Natrium dem Festelektrolyten zugeführt. Das flüssige Natrium dient gleichzeitig als Anode und bildet Kationen, die durch den kationenleitenden Festelektrolyten zur Kathode transportiert werden. An der Kathode wird der an die Kathode anströmende Schwefel zu Polysulfid reduziert, also mit den Natriumionen zu Natriumpolysulfid umgesetzt. Das entsprechende Natriumpolysulfid kann in einem weiteren Behälter gesammelt werden. Alternativ ist es auch möglich, das Natriumpolysulfid mit dem Schwefel gemeinsam im Behälter um den Kathodenraum zu sammeln. Aufgrund des Dichteunterschiedes steigt der Schwefel auf und setzt sich das Natriumpolysulfid ab. Diese Dichtedifferenz kann auch dazu genutzt werden, eine Strömung entlang der Kathode zu bewirken. Ein entsprechendes Batteriedesign ist zum Beispiel in WO 2011/161072 beschrieben.

In Batterien, die mit einem Redox-System auf Basis von Natrium und Schwefel arbeiten, kann mit einem hohen Wirkungsgrad von ungefähr 90% bei der Umsetzung von Natrium und Schwefel zu Natriumpolysulfid elektrische Energie gewonnen werden. Zum Laden der Batterie wird der Vorgang durch Einspeisung von Strom umgekehrt und das Natriumpolysulfid wird zu Schwefel und Natrium gespalten. Da alle elektrochemischen Reaktanden schmelzflüssig vorliegen und der optimale Leitfähigkeitsbereich der ionenleitenden keramischen Membran erst bei höheren Temperaturen erreicht wird, liegt die Betriebstemperatur einer solchen Batterie üblicherweise bei etwa 300°C.

Bei dem in der Batterie eingesetzten Natrium-Ionen leitenden Festelektrolyten handelt es sich üblicherweise um β-Aluminiumoxid. Da dies eine Keramik ist, kann ein Bruch des Festelektrolyten nicht ausgeschlossen werden. In einem solchen Fall kann es zu einer ungeregelten Reaktion zwischen Natrium und Schwefel kommen, was aufgrund der exothermen Reaktion zu einem unerwünschten Temperaturanstieg in der Batterie führen kann. Um den Temperaturanstieg in einem solchen Fall möglichst gering zu halten, ist es zum Beispiel aus der JP-A 10270073 bekannt, einen Verdränger aus Aluminium einzusetzen, mit dem auf der Natriumseite des Festelektrolyten der Raum für das Natrium auf einen Spalt mit einer Spaltweite von 0,01 bis 0,2 mm begrenzt wird. Der Spalt wird dabei durch eine Kombination aus plastischer Verformung und elastischer Rückfederung beim Einpressen des Verdrängers in den üblicherweise ringförmig gestalteten Festelektrolyten erzeugt. Der Einsatz eines Verdrängers aus Aluminium führt jedoch zu einer unkontrollierbaren Reaktion, wenn der Festelektrolyt beschädigt wird. In diesem Fall gibt es zunächst eine Reaktion zwischen Natrium und Schwefel, die zu einer Erhöhung der Temperatur führt. Dieser Temperaturanstieg kann Temperaturen erreichen, bei denen auch das Aluminium beginnt, mit dem durch den Bruch eindringenden Schwefel zu reagieren. Diese Reaktion ist exotherm und lässt sich nicht beenden. Dies führt zu einem weiteren Temperaturanstieg und einer thermischen Zerstörung zunächst der Elektrode und in Abhängigkeit der Konstruktion der Batterie auch der gesamten Batterie.

Neben der Verwendung von Aluminium als Material für den Verdränger offenbaren die JP-A 05266919 und die JP-A 08329981 auch den Einsatz von Edelstahl. EP 0 213 828 A1 offenbart eine Elektrodeneinheit mit Verdrängern.

Da die mechanische Festigkeit von Edelstahl höher ist als die von Aluminium und damit die plastische Verformung bei Betriebstemperatur der Batterie sehr viel geringer ist, kann sich der Edelstahl bei einer zylindrischen Gestaltung des Verdrängers nicht an die Form des Festelektrolyten anpassen. Aufgrund von thermischer Expansion kann es daher zu einem Bruch des Festelektrolyten kommen, wenn der aus Edelstahl gefertigte Verdränger ungleichmäßig gegen den Festelektrolyten gepresst wird. Eine solche ungleichmäßige Anpressung des Verdrängers an den Festelektrolyten resultiert zum Beispiel aus Fertigungsungenauigkeiten bei der Herstellung des keramischen Festelektrolyten.

Aufgabe der vorliegenden Erfindung war es daher, eine Elektrodeneinheit mit einem Verdränger bereitzustellen, die die Nachteile der aus dem Stand der Technik bekannten Elektroden nicht aufweist.

Gelöst wird die erfindungsgemässe die Aufgabe durch eine Elektrodeneinheit für eine elektrochemische Vorrichtung gemäß Anspruch 1.

Durch den Einsatz eines Verdrängers aus Edelstahl oder eines Verdrängers mit einer äußeren Hülle aus Edelstahl wird insbesondere im Fall des Bruchs des Festelektrolyten eine unkontrollierte thermische Zerstörung der gesamten Batterie verhindert, da der Edelstahl erst bei sehr viel höheren Temperaturen und weniger heftig als Aluminium mit dem Schwefel reagiert. Hierdurch lässt sich die Sicherheit beim Betrieb einer solchen Batterie, die auf Basis eines Alkalimetalls und Schwefel arbeitet, deutlich erhöhen. Dadurch, dass der Verdränger federnd an der Innengeometrie des Festelektrolyten anliegt, können Längenänderungen aufgrund thermischer Expansion ausgeglichen werden.

Im Rahmen der vorliegenden Erfindung ist unter Anodenmaterial ein flüssiger Reaktand zu verstehen, der auf der Anodenseite beim Entladen zugeführt wird. Bevorzugt ist das Anodenmaterial elektrisch leitend, insbesondere wird als Anodenmaterial ein flüssiges Alkalimetall eingesetzt. Geeignete Anodenmaterialien sind zum Beispiel Lithium, Natrium oder Kalium, insbesondere Natrium oder Kalium.

Das Kathodenmaterial ist ein flüssiger Reaktionspartner, der mit dem Anodenmaterial elektrochemisch umgesetzt wird. Üblicherweise bildet das Kathodenmaterial mit dem Anodenmaterial durch chemische Reaktion ein Salz. Geeignete Kathodenmaterialien sind zum Beispiel Schwefel oder Polysulfide. Das Kathodenmaterial wird dabei flüssig eingesetzt. Weiterhin eignet sich als Kathodenmaterial auch ein Gemisch aus Natriumchlorid und einem Metall der 8. Nebengruppe, beispielsweise Eisen, Nickel oder Kobalt, in Kombination mit einem schmelzflüssigen Elektrolyten wie NaAlCl₄.

Weitere geeignete Kathodenmaterialien in Verbindung mit einem Alkalimetall als Anodenmaterial sind zum Beispiel Stickstoffoxide (NO oder NO₂), ein Halogen, beispielsweise Chlor, Jod oder Brom, ein Metallhalogenid, beispielsweise NiCl₂ oder FeCl₃, ein Metalloidhalogenid, beispielsweise SiCl₄ oder Si₂Cl₆. Auch ist der Einsatz eines festen Salzes, das sein Redoxpotential ändern kann, möglich. Ein solches Salz ist zum Beispiel NaFePO₄.

Bevorzugt werden gasförmige Kathodenmaterialien, wobei die Betriebsbedingungen, insbesondere Druck und Temperatur der elektrochemischen Vorrichtung, so angepasst werden können, dass das Kathodenmaterial gasförmig vorliegt. So ist es zum Beispiel möglich, bei Einsatz von Schwefel als Kathodenmaterial, den Schwefel nicht nur als Schmelze sondern alternativ auch als Schwefeldampf zuzuführen. Zur Verbesserung der Leitfähigkeit ist es bei Einsatz von gasförmigen Kathodenmaterialien möglich, zusätzlich einen flüssigen Elektrolyten einzusetzen. Dieser muss dabei kompatibel zum eingesetzten Redoxpaar sein. Beim Einsatz von Natrium und Schwefel sind dies beispielsweise Alkalimetallsalze mit Schwefelsauerstoffanionen wie Natriumsulfit oder Natriumthiosulfat. Bei Einsatz von Alkalimetall und Stickstoffoxid eignen sich zum Beispiel Alkalimetallnitrate und -nitrite. Bei Einsatz eines Halogens können Komplexsalze aus einem Alkalimetallhalogenid und einem Metallhalogenid, beispielsweise NaAlCl₄ oder NaZnCl₃, eingesetzt werden.

Eine elektrochemische Vorrichtung im Sinne der vorliegenden Erfindung ist eine Vorrichtung zur Speicherung elektrischer Energie, die auch als Batterie oder Akkumulator bezeichnet wird, oder eine Elektrolysezelle.

Der Transport durch die poröse Elektrode erfolgt vorzugsweise allein aufgrund von Konvektion und Diffusion. Hierdurch ist es möglich, auf Pumpen oder ähnliche Vorrichtungen, mit denen ein erzwungener Transport gefördert wird, zu verzichten. Der Nachteil solcher Vorrichtungen ist im Allgemeinen, dass diese elektrische Energie benötigen, die dann nicht mehr zur Verfügung steht. Weiterer Nachteil von Vorrichtungen für erzwungenen Transport ist deren Verschleiß.

Ein Vorteil des Einsatzes eines Verdrängers ist, dass hierdurch die Menge an flüssigem Anodenmaterial reduziert werden kann. Das Anodenmaterial fließt bei Verwendung eines Verdrängers in einem Raum zwischen dem Verdränger und dem Festelektrolyten. Durch den Einsatz des Verdrängers wird der Raum, in dem sich das Anodenmaterial befindet, auf einen Spalt oder in Abhängigkeit der Ausgestaltung des Verdrängers auch auf mehrere kleine Kanäle reduziert, durch die das Anodenmaterial fließen kann. Der Zulauf des Anodenmaterials kann dabei zum Beispiel über einen Ringspalt am Ende des Festelektrolyten erfolgen oder alternativ durch einen Strömungskanal im Verdränger zugeführt werden. Bevorzugt ist die Zufuhr des Anodenmaterials durch einen Strömungskanal im Verdränger.

Besonders bevorzugt werden der Verdränger beziehungsweise die äußere Hülle des Verdrängers aus Edelstahl gefertigt. Als Edelstahl eignen sich insbesondere Molybdän stabilisierte Edelstähle 1.4571, 1.4401, 1.4404, 1.4405 und 1.4539. Weiterhin ist der Verdränger vorzugsweise aus einem Edelstahlblech gefertigt.

Eine möglichst geringe Belastung des Festelektrolyten wird zusätzlich dadurch erzielt, dass zur Fertigung des Verdrängers ein Edelstahlblech mit einer Dicke im Bereich von 0,05 bis 0,5 mm, vorzugsweise im Bereich von 0,07 bis 0,15 mm, beispielsweise 0,1 mm, eingesetzt wird.

Um eine federnd an die Innengeometrie anliegende Form zu erhalten, weist der Verdränger vorzugsweise eine Außenkontur mit Vorsprüngen und Rücksprüngen auf. Die Vorsprünge und Rücksprünge können zum Beispiel durch eine wellenförmige oder eine Zick-zack-förmige Gestaltung des Verdrängers realisiert werden.

Wenn der Verdränger eine äußere Hülle aus Edelstahl oder Graphit und einen Kern aus einem Nichteisenmetall umfasst, ist die äußere Hülle aus Edelstahl oder Graphit in einer ersten Ausführungsform eine flexible Folie aus Edelstahl oder Graphit. In einer zweiten, alternativen Ausführungsform umfasst die äußere Hülle ein zylinderförmig gebogenes Blech, dessen Kanten in axialer Richtung überlappen. Zusätzlich kann die äußere Hülle beschichtet sein. So ist es zum Beispiel möglich, mit Graphit beschichteten Edelstahl für die äußere Hülle einzusetzen. Das Graphit kann dabei zum Beispiel in Form eines Graphitfilzes vorliegen. Alternativ ist es auch möglich, Graphitfilz als Material für die äußere Hülle zu verwenden.

Wenn die äußere Hülle ein zylinderförmig gebogenes Blech umfasst, dessen Kanten in axialer Richtung überlappen, ist es weiterhin bevorzugt, wenn ein Boden umfasst ist, der mit einem nach oben gebogenen Rand das zylinderförmig gebogene Blech umschließt oder der von dem zylinderförmig gebogenen Blech umschlossen wird, so dass der Boden bei der Herstellung des Verdrängers relativ zur äußeren Hülle beweglich ist.

Zusätzlich zu der äußeren Hülle weist der Verdränger in einer weiteren Ausführungsform auch eine innere Hülle auf, wobei der Verdränger in diesem Fall als Hohlkörper aufgebaut ist. Zwischen der inneren und der äußeren Hülle aus Edelstahl oder Graphit befindet sich ein Kern aus dem Nichteisenmetall.

Als Nichteisenmetall für den Verdränger eignen sich zum Beispiel Aluminium, Zink oder eine mindestens eines dieser Metalle enthaltende Legierung.

Zur Herstellung des Verdrängers werden die Folie aus Edelstahl oder Graphit oder das zylinderförmig gebogene Blech und gegebenenfalls der Boden in den Festelektrolyten eingelegt. Hierbei ist es insbesondere bevorzugt, wenn die Folie oder das zylinderförmig gebogene Blech und gegebenenfalls der Boden am Festelektrolyten anliegen. Anschließend wird das Nichteisenmetall eingebracht. Danach wird das Nichteisenmetall zusammen mit dem Festelektrolyten und der Edelstahlfolie oder der Graphitfolie so weit erwärmt, dass dieses plastisch verformbar ist, aber noch nicht schmelzflüssig. Alternativ ist es auch möglich, einen bereits erwärmten Rohling aus Nichteisenmetall einzubringen.

Auf das Nichteisenmetall wird ein innerer Druck ausgeübt, so dass mit dem Nichteisenmetall die Folie oder das Blech und gegebenenfalls der Boden an den Festelektrolyten gepresst werden. Beim Abkühlen schrumpft das Nichteisenmetall, wobei die Folie oder das zylinderförmig gebogene Blech und gegebenenfalls der Boden am Nichteisenmetall haften, so dass sich ein Spalt zwischen dem Festelektrolyten und der Folie oder dem zylinderförmig gebogenen Blech und gegebenenfalls dem Boden aus Edelstahl oder Graphit bildet. Dieser Spalt ist dabei ausreichend groß, dass das geschmolzene Alkalimetall durch den Spalt fließen kann und mit dem Festelektrolyten in Kontakt kommt, so dass die elektrochemische Vorrichtung betrieben werden kann.

Neben der Herstellung durch Einlegen einer Folie oder eines Blechs für die äußere Hülle und dem nachfolgenden Einbringen des Nichteisenmetalls ist es auch möglich, einen mit Graphit oder Edelstahl beschichteten Rohling aus Nichteisenmetall in den Festelektrolyten einzubringen, diesen zu erwärmen und dann durch Aufbringen eines inneren Drucks an den Festelektrolyten zu pressen. Das Erwärmen kann dabei vor oder nach dem Einbringen des beschichteten Rohlings aus Nichteisenmetall erfolgen.

Da Edelstahl ein nur mäßiger elektrischer Leiter ist, ist es weiterhin bevorzugt, wenn der Verdränger zusätzlich Mittel zur Stromleitung umfasst. Über die Mittel zur Stromleitung wird eine gleichmäßige Stromversorgung sowohl beim Laden als auch beim Entladen sichergestellt. Als Mittel zur Stromleitung eignen sich zum Beispiel vorzugsweise gleichmäßig über den Umfang des Verdrängers verteilte Stromsammler, die in einer bevorzugten Ausführungsform aus einem beidseitig verschlossenen Rohr aus Edelstahl gefertigt sind, in das ein Kern aus einem elektrisch gut leitenden Material eingebracht ist. Das Rohr aus Edelstahl liegt dabei vollflächig am Kern aus dem elektrisch gut leitenden Material an. Durch das Rohr aus Edelstahl wird der elektrisch gut leitende Kern vor einem Angriff durch Schwefel und Polysulfid im Falle eines Bruchs des Festelektrolyten geschützt.

In einer alternativen Ausführungsform umfassen die Mittel zur Stromleitung eine vollflächige oder strukturierte Beschichtung aus einem elektrisch gut leitenden Material auf der Innenseite des Verdrängers.

Als elektrisch gut leitendes Material für die Mittel zur Stromleitung eignen sich zum Beispiel Kupfer, Aluminium, Silber oder Gold. Wenn ein Stromsammler mit einem Rohr aus Edelstahl eingesetzt wird, kann das elektrisch gut leitende Material auch Natrium sein. Bei Betriebstemperatur von üblicherweise 300°C wird das Natrium zwar flüssig, kann jedoch aufgrund des Rohrs aus Edelstahl nicht entweichen. Besonders bevorzugt ist das elektrisch gut leitende Material Kupfer oder Aluminium. Neben den reinen Metallen können auch Mischungen oder Legierungen eingesetzt werden, die mindestens eines dieser Metalle enthalten. Besonders bevorzugt ist jedoch der Einsatz in ungemischtem oder unlegiertem Zustand.

Um eine gute Funktion der Elektrodeneinheit zu gewährleisten ist es notwendig, dass die Mittel zur Stromleitung gut elektrisch leitend mit dem Verdränger verbunden sind. Hierzu ist es bei Verwendung der Stromsammler zum Beispiel möglich, die Stromsammler jeweils mit dem Verdränger zu verschweißen. Bevorzugt ist es jedoch, die Stromsammler in Rücksprünge des Verdrängers zu klemmen. Die Stromsammler sind dabei vorzugsweise auf der Außenseite des Verdrängers angeordnet.

Um die Stromsammler fest mit dem Verdränger zu verbinden, ist es zum Beispiel möglich, die Rücksprünge in Form eines Omega zu gestalten, wobei der Durchmesser des Omega dem Außendurchmesser des Drahtes entspricht. Bei einer entsprechenden Gestaltung der Rücksprünge können die Drähte jeweils mit einer stabilen Verbindung in die Rücksprünge geklemmt werden und bilden einen gleichmäßigen Kontakt mit dem Verdränger über die gesamte Länge.

Wenn der Verdränger eine äußere Hülle und einen Kern aus Nichteisenmetall umfasst, ist es möglich, den Kern aus Nichteisenmetall zur Stromleitung zu nutzen.

Die Elektrode auf der Seite des Festelektrolyten, auf der sich der Raum für das Kathodenmaterial befindet, kann wie aus dem Stand der Technik bekannt gestaltet sein.

Um insbesondere bei großen elektrochemischen Vorrichtungen zur Speicherung elektrischer Energie, im Folgenden auch Batterie genannt, eine gleichmäßige Funktion der gesamten Elektrode zu erhalten, ist in einer bevorzugten Ausführungsform für große Vorrichtungen zur elektrochemischen Energiespeicherung die flächige Rohr- oder Blechwand wellblechartig strukturiert, so dass sich zwischen der Grenze des porösen Elektrodenmaterials und der wellblechartigen Rohr- oder Blechwand abwechselnde senkrecht ausgerichtete Längskanäle bilden, die aber mit den Hohlräumen des Elektrodenmaterials kommunizieren können. In diesen Längskanälen kann sich, getrieben vom Dichteunterschied beispielsweise zwischen Polysulfid und Schwefel eine Konvektionsströmung ausbilden, die beim Laden nach oben und beim Entladen nach unten gerichtet ist.

In einer weiteren besonders bevorzugten Ausführungsform ist das poröse Elektrodenmaterial in Längssegmente unterteilt, wobei zwischen den Längssegmenten vorzugsweise Strömungssperren angeordnet sind, um einen Massenaustausch von flüssigem Kathodenmaterial zwischen poröser Elektrode und Längskanal zu erzwingen.

In einer weiteren Ausführungsform werden die porösen Elektrodensegmente zusätzlich mittels seitlich geschlossener Segmentwände gekammert, um eine gezielte Anströmung und Abströmung aus der porösen Elektrode zu erzwingen. Somit weist die Segmentwand in dieser bevorzugten Ausführungsform mehrere quer zur Strömungsrichtung ausgerichtete Reihen an Eintrittsöffnungen und Austrittsöffnungen auf, wobei sich jeweils in Strömungsrichtung Eintrittsöffnungen und Austrittsöffnungen abwechseln und in Strömungsrichtung jeweils vor den Eintrittsöffnungen und nach den Austrittsöffnungen Strömungssperren in der porösen Elektrode aufgenommen sind.

Beim Entladen der Batterie, d.h. bei der Abgabe elektrischer Energie, tritt das Kathodenmaterial durch die Eintrittsöffnungen in die poröse Elektrode ein und wird mit dem Anodenmaterial elektrochemisch umgesetzt. Durch die Austrittsöffnungen tritt dann das Reaktionsprodukt aus. Die Strömungssperren in der porösen Elektrode dienen dazu, dass das Reaktionsprodukt gezwungen wird, an den Austrittsöffnungen auszutreten, so dass das Reaktionsprodukt nicht weiter in der porösen Elektrode strömen kann. Dies ermöglicht es, dass Kathodenmaterial durch den Austrittsöffnungen nachfolgende Eintrittsöffnungen in die poröse Elektrode eintreten und dort umgesetzt werden kann. Hierdurch kann die gesamte Länge der Elektrode gleichmäßig zur elektrochemischen Umsetzung des Anodenmaterials mit dem Kathodenmaterial genutzt werden.

Um die gesamte Fläche der porösen Elektrode ausnutzen zu können, ist es weiterhin bevorzugt, wenn jeweils auf eine Reihe Austrittsöffnungen unmittelbar eine Reihe Eintrittsöffnungen folgt. In diesem Fall strömen das gegebenenfalls nicht umgesetzte Kathodenmaterial und das Reaktionsprodukt bis zu einer Strömungssperre und treten durch die Austrittsöffnungen aus der Elektrode aus, und direkt unterhalb der Strömungssperre wird frisches Kathodenmaterial, das mit dem Anodenmaterial umgesetzt wird, der porösen Elektrode zugeführt.

Um zu vermeiden, dass das in der porösen Elektrode gebildete Reaktionsprodukt, das durch die Austrittsöffnungen austritt, unmittelbar in die dahinterliegenden Eintrittsöffnungen wieder in die poröse Elektrode eintritt, ist es weiterhin bevorzugt, wenn die in Strömungsrichtung des Kathodenmaterials auf die Austrittsöffnungen folgenden Eintrittsöffnungen zu den Austrittsöffnungen versetzt angeordnet sind.

Hierbei ist es zum Beispiel möglich, die Eintrittsöffnungen und die Austrittsöffnungen jeweils mit einem rechteckigen Querschnitt zu gestalten und jeweils zwischen zwei benachbarten Eintrittsöffnungen bzw. zwei benachbarten Austrittsöffnungen in der Breite der Eintrittsöffnungen bzw. Austrittsöffnungen einen Steg der flächigen Elektrode vorzusehen. Für die versetzte Anordnung schließt sich dann jeweils an eine Eintrittsöffnung der Steg zwischen zwei Austrittsöffnungen und an eine Austrittsöffnung der Steg zwischen zwei Eintrittsöffnungen an.

Neben einer Gestaltung mit rechteckförmigen Eintrittsöffnungen und Austrittsöffnungen ist es auch möglich, die Eintrittsöffnungen und Austrittsöffnungen in jeder beliebigen anderen Form zu gestalten. So können diese zum Beispiel kreisförmig, halbkreisförmig, elliptisch, oval, dreieckig oder in Form eines Polygons mit beliebig vielen Ecken gestaltet sein. Bevorzugt ist dabei eine kreisförmige, eine halbkreisförmige oder eine rechteckige Form der Eintrittsöffnungen und Austrittsöffnungen. Auch ist es möglich, Eintrittsöffnungen und Austrittsöffnungen in unterschiedlicher Form vorzusehen, wobei eine gleiche Form von Eintrittsöffnungen und Austrittsöffnungen bevorzugt ist.

Erfindungsgemäß ist die Segmentwand elektrisch leitend mit der porösen Elektrode verbunden. Beim Entladen der Vorrichtung wird die bei der elektrochemischen Umsetzung des Anodenmaterials mit dem Kathodenmaterial frei werdende elektrische Spannung über die poröse Elektrode an die Segmentwand geleitet und kann von der Segmentwand abgenommen werden. Hierzu ist es insbesondere bevorzugt, wenn die Segmentwand elektrisch leitend mit einem oder mehreren Sammelleitern verbunden ist. Um das materialbedingte Risiko einer unerwünschten exothermen Reaktion des Stromleiters mit Schwefel oder Polysulfid zu vermeiden, werden in einer bevorzugten Ausführungsform die Sammelleiter aus gut leitenden Materialien wie Aluminium, Kupfer oder Natrium mit Edelstahl ummantelt oder gekammert. Der Sammelleiter kann dabei auch in Form einer Abdeckung gestaltet sein, die vorzugsweise so ausgebildet ist, dass durch die Abdeckung Strömungskanäle entlang der Elektrode ausgebildet werden. Alternativ ist es auch möglich, eine Abdeckung vorzusehen, die so gestaltet ist, dass Strömungskanäle entlang der Elektrode ausgebildet werden, die elektrische Kontaktierung durch die Abdeckung hindurchzuführen und den Sammelleiter außerhalb der Abdeckung anzuordnen. Bevorzugt ist es jedoch, die Abdeckung elektrisch leitend als Sammelleiter zu gestalten. Hierbei ist es weiter bevorzugt, wenn in der Abdeckung zusätzlich Stabelektroden aufgenommen sind, wobei die Stabelektroden vorzugsweise aus einem elektrisch gut leitenden Material gefertigt sind, das sich vom Material der Abdeckung unterscheidet. Die Stabelektroden können dabei zum Beispiel außen auf der Abdeckung aufliegen oder sind von dem Material für die Abdeckung umschlossen. Bevorzugt sind die einzelnen Stabelektroden dabei äquidistant in der Abdeckung angeordnet. So ist es zum Beispiel möglich, die Stabelektroden jeweils zwischen zwei Strömungskanälen anzuordnen. Alternativ können die Stabelektroden jedoch zum Beispiel auch jeweils im Bereich eines Strömungskanals angeordnet sein.

In einer besonders bevorzugten Ausführungsform ist zur Ausbildung der Strömungskanäle die Abdeckung wellenförmig gestaltet, wobei jeweils die Wellentäler an der flächigen Elektrode anliegen und die Strömungskanäle durch die entsprechenden Wellenberge gebildet werden. Neben einer wellenförmigen Gestaltung ist es alternativ zum Beispiel auch möglich, die Abdeckung flach mit Stegen zu gestalten, wobei die Strömungskanäle jeweils zwischen zwei Stegen ausgebildet sind und die Stege zur Ausbildung der Strömungskanäle auf der flächigen Elektrode anliegen.

In einer besonders bevorzugten Ausführungsform ist der Festelektrolyt zylinderförmig ausgebildet und die poröse Elektrode umschließt den Festelektrolyten. In diesem Fall befindet sich das Anodenmaterial im Inneren des zylinderförmig ausgebildeten Festelektrolyten und das Kathodenmaterial strömt außen entlang der porösen Elektrode. Bei einer zylinderförmigen Gestaltung des Festelektrolyten wird die Segmentwand vorzugsweise durch mindestens eine Hülse gebildet, die die poröse Elektrode umschließt. Die Eintrittsöffnungen und Austrittsöffnungen sind dabei in der Hülse ausgebildet. Um einen Stromfluss von der porösen Elektrode zur hülsenför-mig ausgebildeten flächigen Elektrode zu erhalten, entspricht dabei der Außendurchmesser der porösen Elektrode dem Innendurchmesser der Hülse. Hierdurch liegt die Hülse flächig an der porösen Elektrode an.

Wenn die Segmentwand durch nur eine Hülse gebildet wird, so ist es möglich, mehrere Reihen an Eintrittsöffnungen und Austrittsöffnungen in der Hülse auszubilden. Bevorzugt ist jedoch eine Gestaltung mit mehreren Hülsen, wobei die Eintrittsöffnungen und Austrittsöffnungen in diesem Falle jeweils an den Enden einer Hülse ausgebildet sind. Hierzu ist es zum Beispiel möglich, die Enden der Hülse jeweils in Form eines Rechteckprofils zu gestalten. Hierbei sind bei einer Hülse die gegenüberliegenden Rechteckprofile so ausgebildet, dass sich jeweils die Rücksprünge gegenüberliegen. Auf der Elektrode werden dann nacheinander mehrere Hülsen aufgebracht, die jeweils so zueinander verdreht sind, dass die Rücksprünge einer Hülse den dazwischen liegenden vorstehenden Bereichen gegenüberliegen. Auf diese Weise werden durch die Rücksprünge und die benachbarte Hülse die Eintrittsöffnungen und Austrittsöffnungen gebildet.

Bei einem zylinderförmig gestalteten Festelektrolyten ist die Abdeckung ebenfalls vorzugsweise als Hülse ausgebildet und so gestaltet, dass die Kanäle in axialer Richtung entlang der porösen Elektrode ausgerichtet sind. Hierbei ist es einerseits möglich, die Abdeckung als ringförmige Hülse zu gestalten, die mit Stegen versehen ist, durch die die einzelnen Strömungskanäle abgetrennt werden, oder die Hülse ist wellenförmig ausgebildet, so dass durch die Wellenberge und Wellentäler die Kanäle ausgebildet sind, wobei die Wellenberge jeweils an den die Segmentwände bildenden Hülsen anliegen. Beim Entladen der Batterie strömt das Kathodenmaterial durch die Strömungskanäle und tritt jeweils über Eintrittsöffnungen in die poröse Elektrode ein und nach der elektrochemischen Umsetzung als Reaktionsprodukt aus den Austrittsöffnungen wieder aus. Durch die versetzte Anordnung von Eintrittsöffnungen und Austrittsöffnungen kann das aus den Austrittsöffnungen austretende Material nicht unmittelbar durch nachfolgende Eintrittsöffnungen wieder in die poröse Elektrode eintreten. Hierdurch wird sichergestellt, dass durch die Eintrittsöffnungen jeweils ausreichend nicht umgesetztes Kathodenmaterial an die poröse Elektrode gelangt.

Neben der vorstehend beschriebenen Ausführungsform, bei der die Eintrittsöffnungen und nachfolgenden Austrittsöffnungen direkt übereinander angeordnet sind und die Strömungskanäle in axialer Richtung entlang der porösen Elektrode ausgebildet sind, ist es auch möglich, dass die Strömungskanäle spiralförmig verlaufen. Bei einer flachen Elektrodeneinheit können die Strömungskanäle schräg verlaufen. In diesem Fall ist die Anordnung der Eintrittsöffnungen und Austrittsöffnungen vorzugsweise derart, dass jeweils in einem Strömungskanal eine Austrittsöffnung einer Eintrittsöffnung folgt und die unmittelbar der Austrittsöffnung nachfolgende Eintrittsöffnung in einem benachbarten Strömungskanal liegt. Auch in diesem Fall wird durch die entsprechende Anordnung der Eintrittsöffnungen und Austrittsöffnungen sichergestellt, dass das aus den Austrittsöffnungen austretende Reaktionsprodukt nicht unmittelbar anschließend wieder in die nachfolgenden Eintrittsöffnungen in die poröse Elektrode eintritt.

Vorstehend wurden die Strömungsrichtungen und Transportwege des Anodenmaterials und Kathodenmaterials jeweils für den Entladungsprozess beschrieben, bei dem Strom erzeugt wird. Zum Laden der Vorrichtung zur Speicherung elektrischer Energie erfolgt der Transport in entgegengesetzter Richtung. In diesem Fall wird das beim Entladen entstehende Reaktionsprodukt durch die Austrittsöffnungen in die poröse Elektrode geführt, in der porösen Elektrode zum Anodenmaterial und Kathodenmaterial umgesetzt und das Kathodenmaterial tritt durch die Eintrittsöffnungen wieder aus der porösen Elektrode aus und strömt in einen Vorratsbehälter. Die beim Ladevorgang gebildeten Kationen werden durch den Festelektrolyten transportiert, nehmen ein Elektron auf und werden als neutrales Anodenmaterial durch den Strömungskanal im Verdränger oder durch die ringförmige Zufuhreinrichtung, durch die das Anodenmaterial beim Laden strömt, wieder in einen Vorratsbehälter zurücktransportiert.

Die erfindungsgemäße Elektrodeneinheit eignet sich insbesondere zum Einsatz in Vorrichtungen zur Speicherung elektrischer Energie, die mit einem Alkalimetall als Anodenmaterial betrieben werden. Als Anodenmaterial eignet sich dabei zum Beispiel Lithium, Natrium oder Kalium, bevorzugt Natrium oder Kalium. Der Betrieb der Vorrichtung zur Speicherung elektrischer Energie wird dabei bei einer Temperatur durchgeführt, bei der das eingesetzte Alkalimetall flüssig vorliegt. Um die entsprechenden Temperaturen bereitzustellen, ist es hierbei zum Beispiel möglich, den im zylinderförmigen Festelektrolyten enthaltenen Verdränger gleichzeitig als Heizelement zu gestalten, so dass durch diesen die Temperatur in der Elektrodeneinheit in einem Bereich gehalten werden kann, in dem das Anodenmaterial flüssig vorliegt. Da das Anodenmaterial ein flüssiges Metall ist, ist dieses elektrisch leitfähig und kann so direkt als Anode genutzt werden. Hierzu ist es lediglich notwendig, einen elektrischen Leiter mit dem flüssigen Anodenmaterial zu kontaktieren, durch den der Strom fließen kann.

Als Kathodenmaterial wird ein Material eingesetzt, das mit dem Anodenmaterial chemisch reagieren kann. Vorzugsweise wird als Kathodenmaterial Schwefel oder Polysulfid eingesetzt.

Als Festelektrolyt wird in einer bevorzugten Ausführungsform eine Keramik eingesetzt. Besonders geeignet als Material für den Festelektrolyten ist β-Aluminiumoxid oder β"-Aluminiumoxid. Dieses wird vorzugsweise stabilisiert, beispielsweise mit MgO oder Li₂O.

Alternativ zu β-Aluminiumoxid oder β"-Aluminiumoxid können auch andere keramische Materialien als Festelektrolyt eingesetzt werden. Zum Beispiel kann die als NASCION^{®} bezeichnete Keramik, deren Zusammensetzung in EP-A 0 553 400 angegeben ist, eingesetzt werden. Alternativ zu Keramiken können auch Natriumionen-leitende Gläser oder Zeolithe und Feldspate eingesetzt werden. Insbesondere bevorzugt sind jedoch Natrium-β"-Aluminiumoxid, Natrium-β-Aluminiumoxid, Natrium-β/β"-Aluminiumoxid. Die Natriumionen-leitenden Keramiken sind bevorzugt einseitig unten geschlossene, oben offene, dünnwandige Rohre, wenn der Festelektrolyt zylinderförmig ausgebildet ist. In diesem Fall ist es weiterhin bevorzugt, wenn die Rohre einen Durchmesser von 20 bis 50 mm und eine Länge im Bereich von 0,5 m bis 2 m aufweisen. Die Wandstärke liegt vorzugsweise im Bereich von 0,5 mm bis 3 mm, insbesondere im Bereich von 1,5 mm bis 2 mm.

Die poröse Elektrode wird aus einem Material gefertigt, das gegenüber den bei der elektrochemischen Reaktion eingesetzten Substanzen inert ist. Als Material für die Elektrode eignet sich zum Beispiel Kohlenstoff, insbesondere in Form von Graphit.

Damit die an der elektrochemischen Reaktion beteiligten Stoffe durch die Elektrode strömen können, ist diese erfindungsgemäß porös. Dies wird zum Beispiel dadurch erzielt, dass das Material der porösen Elektroden in Form eines Filzes oder Vlieses vorliegt. Ganz besonders bevorzugt ist die Elektrode eine Graphitfilzelektrode.

Um einen direkten Kontakt der Elektrode mit dem Festelektrolyten zu vermeiden, ist zwischen der porösen Elektrode und dem Festelektrolyten vorzugsweise eine hinsichtlich Elektronenleitung isolierende poröse mit flüssigem Elektrolyten gefüllte Schicht angeordnet. Als "hinsichtlich Elektronenleitung isolierend" wird im Rahmen der vorliegenden Erfindung ein Material verstanden, das einen spezifischen Widerstand von mindestens 10⁸ Ohm*cm und insbesondere von mindestens 10⁹ Ohm*cm aufweist. Das Material für die isolierende Schicht ist dabei so zu wählen, dass Kationen, die durch den Festelektrolyten transportiert werden, auch durch die isolierende Schicht an die poröse Elektrode gelangen können, und die Elektronenleitfähigkeit vernachlässigbar klein ist. Geeignet als elektrisch isolierendes Material, das zwischen dem Festelektrolyten und der Elektrode angeordnet ist, sind zum Beispiel eloxiertes oder Sulfidpassiviertes Aluminiumgewebe, keramische Fasern, Glasfasern oder Kohlegewebe. Durch das elektrisch nicht leitende Material wird vermieden, dass sich nicht leitendes Kathodenmaterial, beispielsweise Schwefel, auf dem Festelektrolyten ablagert und dadurch beim Laden den Stromfluss limitiert.

Die Segmentwand, über die die poröse Elektrode stromleitend mit dem Sammelleiter verbunden ist, ist vorzugsweise aus einem metallischen Werkstoff, insbesondere aus Stahl gefertigt. Geeignete Stähle sind die gleichen, wie sie auch für den Verdränger eingesetzt werden können.

Wenn die Segmentwand aus einem Stahl gefertigt ist, ist es wie auch beim Verdränger bevorzugt, wenn zusätzliche Mittel zur Stromleitung umfasst sind. Da die Segmentwand beidseitig mit Schwefel und Polysulfid in Kontakt steht, ist hier keine Beschichtung mit einem elektrisch gut leitenden Material möglich. Als Mittel zur Stromleitung werden deshalb vorzugsweise Stromsammler aus einem beidseitig verschlossenen Edelstahlrohr mit einem elektrisch gut leitfähigen Kern eingesetzt, wie sie vorstehend für den Verdränger beschrieben worden sind. Durch den Einsatz der Mittel zur Stromleitung wird die elektrische Leitfähigkeit der Elektrode verbessert. In einer besonders bevorzugen Ausführungsform ist das Edelstahlrohr des Sammelleiters zusätzlich verchromt.

Wie auch beim Verdränger ist es bevorzugt, die elektrisch leitenden Drähte mit einer Klemmverbindung in Wellentälern der wellenförmig gestalteten flächigen Elektrode anzuordnen.

Die die Kanäle bildende Abdeckung ist ebenfalls vorzugsweise aus einem elektrisch leitfähigen Material gefertigt und stellt in einer besonders bevorzugten Ausführungsform gleichzeitig den Sammelleiter dar. Alternativ ist es auch möglich, den Sammelleiter außerhalb der Abdeckung vorzusehen. Bevorzugt ist die Abdeckung ebenfalls aus einem metallischen Werkstoff, beispielsweise aus Stahl gefertigt. Hierbei wird vorzugsweise das gleiche Material verwendet wie für die Segmentwand.

Ausführungsbeispiele der Erfindung sind in den Figuren dargestellt und werden in der nachfolgenden Beschreibung näher erläutert.

Es zeigen:
- Figur 1: eine Schnittdarstellung durch eine erfindungsgemäß ausgebildete Elektrodeneinheit,
- Figur 2: eine Draufsicht auf eine erfindungsgemäß ausgebildete Elektrodeneinheit mit Segmentwand,
- Figur 3: eine dreidimensionale Darstellung der erfindungsgemäßen Elektrodeneinheit mit Segmentwand,
- Figur 4: eine Schnittdarstellung eines erfindungsgemäß ausgebildeten Verdrängers,
- Figur 5: eine Schnittdarstellung einer erfindungsgemäß gestalteten flächigen Elektrode,
- Figur 6: einen erfindungsgemäß ausgebildeten Verdränger in einer zweiten Ausführungsform,
- Figur 7: einen erfindungsgemäß ausgebildeten Verdränger in einer dritten Ausführungsform,
- Figur 8: den Verdränger gemäß Figur 7 als Längsschnitt,
- Figur 9: Aufbau des Verdrängers in einer Ausführungsform mit zylinderförmig gebogenem Blech als Hülle vor Verpressen mit dem Kern,
- Figur 10: Aufbau des Verdrängers mit zylinderförmig gebogener äußerer Hülle und Boden vor dem Verpressen mit dem Kern.

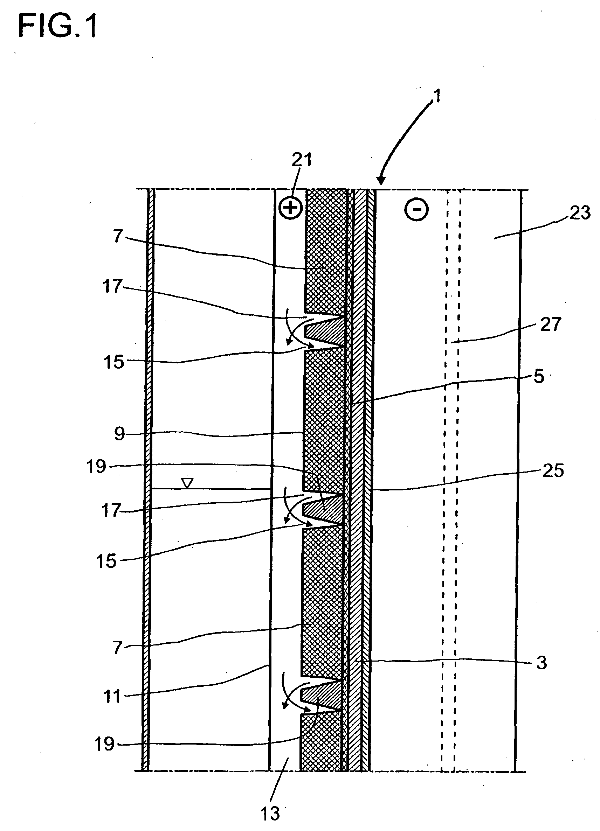

In Figur 1 ist eine erfindungsgemäße Elektrodeneinheit in Form eines Längsschnitts dargestellt.

Eine Elektrodeneinheit 1 umfasst einen Festelektrolyten 3, der in der hier dargestellten Ausführungsform zylinderförmig ausgebildet ist und auf einer Seite verschlossen ist. Der Festelektrolyt 3 ist im Allgemeinen eine keramische Membran, die für spezielle Kationen durchlässig ist. Wie vorstehend beschrieben eignet sich als Material für den Festelektrolyten 3 zum Beispiel β"-Aluminiumoxid.

An den Festelektrolyten 3 schließt sich eine hinsichtlich Elektronenleitung isolierende Zwischenschicht 5 an. Die hinsichtlich Elektronenleitung isolierende Zwischenschicht 5 ist zum Beispiel ein passiviertes Aluminium-Gewebe, beispielsweise ein eloxiertes oder sulfidpassiviertes Aluminium-Gewebe, oder Kohlegewebe oder aus keramischen Fasern oder Glasfasern aufgebaut. Alternativ ist es auch möglich, als hinsichtlich Elektronenleitung isolierende Zwischenschicht 5 eine spezielle Beschichtung auf die poröse Elektrode aufzubringen. Hinsichtlich Elektronenleitung isolierend bedeutet in diesem Zusammenhang, dass der spezifische Widerstand der Schicht größer ist als 10⁸ Ohm*cm, bevorzugt größer als 10⁹ Ohm*cm und insbesondere größer als 2 x 10⁹ Ohm*cm.

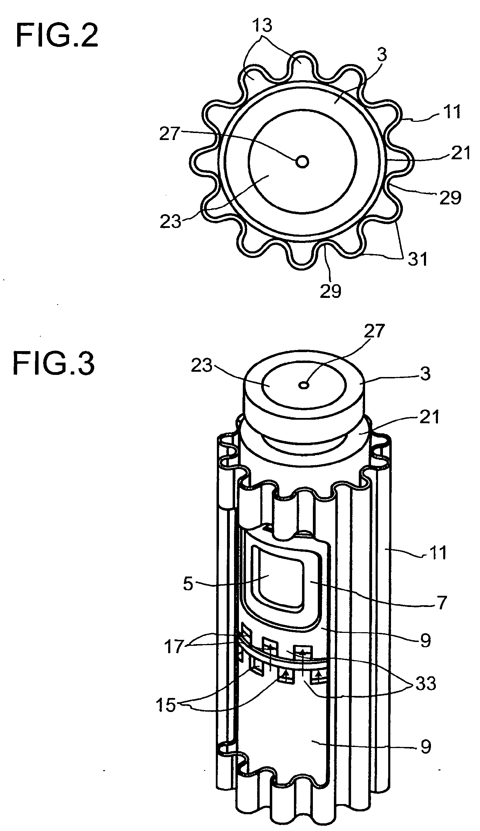

Die hinsichtlich Elektronenleitung isolierende Zwischenschicht 5 wird von einer porösen Elektrode 7 umschlossen. Die poröse Elektrode 7 wird zum Beispiel aus einem Graphitfilz gefertigt. Die poröse Elektrode 7 wird in einer bevorzugten Ausführungsform, wie in den Figuren 2 und 3 dargestellt, von einer Segmentwand 9 umschlossen. In der hier dargestellten Ausführungsform mit zylinderförmigen Festelektrolyten 3 ist die Segmentwand 9 dabei in Form einer Hülse gestaltet.

An die Segmentwand 9 schließt sich eine Abdeckung 11 an. Die Abdeckung 11 ist in der hier dargestellten Ausführungsform in Form eines Hüllrohres gestaltet, das einen wellenförmigen Querschnitt aufweist. Hierdurch liegt die in Form eines Hüllrohres gestaltete Abdeckung 11 jeweils mit den Wellentälern an der Segmentwand 9 an und bildet durch die Wellenberge Kanäle 13 entlang der Segmentwand 9. Durch die Kanäle 13 strömt beim Laden oder Entladen Kathodenmaterial. Wie vorstehend bereits beschrieben ist das Kathodenmaterial zum Beispiel Schwefel oder ein Alkalipolysulfid.

In den in den Figuren 2 und 3 dargestellten Ausführungsformen strömt im Betrieb der Elektrodeneinheit 1 beim Entladen das Kathodenmaterial durch Eintrittsöffnungen 15 aus dem Strömungskanal 13 in die poröse Elektrode 7 und wird dort elektrochemisch zum Anion reduziert. Mit den durch den Festelektrolyten 3 ebenfalls in die poröse Elektrode 7 transportierten Kationen reagiert das Anion unter Ausbildung eines Salzes. Besonders bevorzugt sind die Kationen Alkalimetallionen, so dass sich ein Alkalimetallsalz, insbesondere ein Alkalimetallpolysulfid, ganz besonders bevorzugt Natriumpolysulfid in der porösen Elektrode 7 bildet. Das in der porösen Elektrode 7 gebildete Reaktionsprodukt, beispielsweise das Alkalimetallpolysulfid tritt über Austrittsöffnungen 17 wieder aus der porösen Elektrode 7 in den Strömungskanal 13 aus.

Die Anzahl der verwendeten Hülsen für die Segmentwand 9 ist dabei abhängig von der Höhe der Hülse und der Länge der Elektrodeneinheit und kann auch größer als die hier dargestellte Anzahl sein. Auch ist es möglich, nur eine Hülse vorzusehen und in der Hülse mehrere Reihen an Eintrittsöffnungen 15 und Austrittsöffnungen 17 auszubilden.

Um unabhängig vom Entladungszustand eine gleichbleibende elektrische Leistung abgeben zu können, ist die poröse Elektrode 7 durch Strömungssperren 19 segmentiert. Die Strömungssperre 19 verhindert, dass in der porösen Elektrode 7 gebildetes Reaktionsprodukt im Bereich der Austrittsöffnungen 17 weiter durch die poröse Elektrode 7 strömen kann. Durch die Strömungssperre 19 wird sichergestellt, dass das gesamte Material aus der porösen Elektrode 7 im Bereich der Austrittöffnung 17 in den Strömungskanal 13 austritt. Hierdurch wird sichergestellt, dass in einem nachfolgenden Segment der porösen Elektrode 7 frisches Kathodenmaterial zugeführt wird und so die Leistung der Elektrodeneinheit 1 verbessert wird. Damit das an einer Austrittsöffnung 17 ausgetretene Material nicht unmittelbar in das nächste Segment der porösen Elektrode eintritt, sind die den Austrittsöffnungen 17 nachfolgenden Eintrittsöffnungen 15 versetzt zu den Austrittsöffnungen 17 angeordnet.

Der beim Entladen freiwerdende Strom wird über einen Stromanschluss 21 abgegriffen. Hierzu sind die jeweiligen Segmente der porösen Elektrode 7 mit dem Stromanschluss 21 kontaktiert. Der Kontakt erfolgt zum Beispiel über die Segmentwand 9 und die Abdeckung 11. Hierbei sind sowohl Segmentwand 9 als auch die Abdeckung 11 elektrisch leitend ausgebildet. Alternativ ist es auch möglich, die porösen Elektroden 7, die von den Segmentwänden 9 umschlossen sind, jeweils mit einem zentralen Leiter zu verbinden, der mit dem Stromanschluss 21 kontaktiert ist. Auch jede beliebige andere, dem Fachmann bekannte Möglichkeit zum elektrischen Kontaktieren der porösen Elektrode 7 ist möglich.

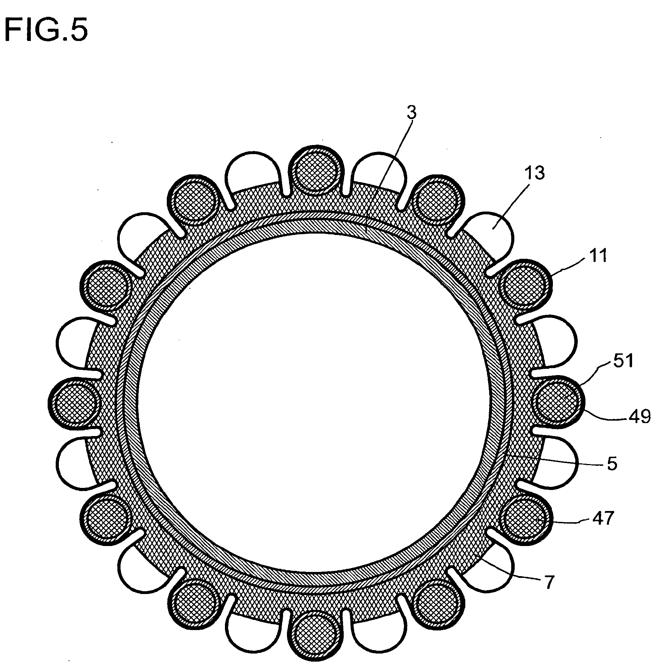

In der in Figur 5 gezeigten vereinfachten Ausführungsform enthält der Aufbau keine Segmentwände. Die porösen Elektroden 7 haben direkten Kontakt zur wellenförmigen Abdeckung 11, so dass sich auch hier vertikal gerichtete Strömungskanäle 13 ausbilden. Die Stromzuleiter stehen in direktem elektrischem Kontakt zu der porösen Elektrode 7.

Beim Entladen ist die poröse Elektrode 7 die Kathode. Die Anode wird vom Anodenmaterial gebildet, das sich auf der der porösen Elektrode 7 gegenüberliegenden Seite des Festelektrolyten 3 befindet. In der hier dargestellten Ausführungsform mit zylinderförmigen Festelektrolyten 3 befindet sich das Anodenmaterial im Inneren des Festelektrolyten 3. Um die Menge an Anodenmaterial gering halten zu können, befindet sich im Festelektrolyten 3 ein Verdränger 23. Der Verdränger 23 ist dabei so ausgebildet, dass zwischen dem Festelektrolyten 3 und dem Verdränger 23 ein Spalt 25 ausgebildet wird. Im Spalt 25 befindet sich das Anodenmaterial. Wenn als Anodenmaterial ein Alkalimetall eingesetzt wird, ist das Anodenmaterial selbst elektrisch leitend und kann direkt als Elektrode, beim Entladen als Anode, benutzt werden. Hierzu ist es zum Beispiel möglich, dass der Verdränger 23 elektrisch leitend ist und der Verdränger 23 den Stromanschluss bildet.

Zur Zufuhr des Anodenmaterials ist im Verdränger 23 ein Kanal 27 ausgebildet. Das Anodenmaterial strömt durch den Kanal 27 in den Spalt 25 und bildet bei der elektrochemischen Reduktion Kationen, die durch den Kationen leitenden Festelektrolyten 3 in die poröse Elektrode 7 gelangen, wo diese mit den dort gebildeten Anionen neutralisierend reagieren.

Um die für den Betrieb erforderliche Temperatur einzustellen, damit Anodenmaterial und Kathodenmaterial schmelzflüssig bleiben, ist es weiterhin möglich, den Verdränger 23 zu beheizen. Die Beheizung kann beispielsweise mit einem Heizstab elektrisch erfolgen.

Die Beheizung erfolgt in einer besonderen Ausführungsform mit unterschiedlicher Heizleistung über die Länge der Elektrodeneinheit verteilt, so dass oben mehr und unten am wenigsten geheizt wird. Dadurch wird erreicht, dass das unter den Schmelzpunkt abgekühlte Alkalimetall und das umgebende Kathodenmaterial von oben nach unten in Form eines Schmelzkegels aufschmelzen und damit keine zerstörend wirkenden Drücke durch eingeschlossene Schmelze entstehen können.

Zum Laden wird das Salz, beispielsweise Natriumpolysulfid, über die Kanäle 13 zugeführt, tritt durch die Austrittsöffnungen 17 in die poröse Elektrode ein und wird durch eine angelegte Spannung in Natriumionen und Schwefel getrennt, wobei die Natriumionen durch den Festelektrolyten 3 in den Spalt 25 strömen und durch den Kanal 27 austreten können. Der Schwefel tritt durch die Eintrittsöffnungen 15 in der Segmentwand 9 aus der porösen Elektrode 7 in den Strömungskanal 13 aus. Die Strömung wird aufgrund des Dichteunterschiedes zwischen Natriumpolysulfid und Schwefel initiiert. Da das Natriumpolysulfid eine größere Dichte aufweist als Schwefel, sinkt das Natriumpolysulfid nach unten und bildet dadurch eine Strömung, so dass die Elektrodeneinheit 1 kontinuierlich betrieben werden kann, solange noch ein Vorrat an Alkalimetall und an Schwefel vorliegt.

Der Schwefel und das Alkalimetall sind in separat voneinander angeordneten Vorratsbehältern bevorratet, wobei der Vorratsbehälter für den Schwefel zum Beispiel auch die Abdeckung 11 umschließen kann und über die von der Abdeckung 11 gebildeten Kanäle 13 zur porösen Elektrode 7 strömt. Das gebildete Salz wird dann ebenfalls in dem Vorratsbehälter für Schwefel gesammelt. Aufgrund des Dichteunterschiedes bildet sich ein zweiphasiges System aus, wobei sich unten das Natriumpolysulfid und oben der Schwefel befindet.

Figur 2 zeigt eine Draufsicht auf die erfindungsgemäß ausgebildete Elektrodeneinheit 1. In der in Figur 2 dargestellten Draufsicht lässt sich insbesondere die wellenförmige Gestaltung der als Hüllrohr ausgebildeten Abdeckung 11 erkennen. Die wellenförmige Abdeckung 11 liegt dabei mit Wellentälern 29 an der Segmentwand 9 an und es werden einzelne Kanäle 13 durch die Wellenberge 31, die sich mit den Wellentälern 29 abwechseln gebildet. Beim Entladen strömt das Kathodenmaterial in die Kanäle 13, die durch die Wellenberge 31 gebildet werden, ein und tritt dann durch Eintrittsöffnungen 15 in die poröse Elektrode ein. Das Material, das nicht in die poröse Elektrode 7 gelangt, durchströmt weiter den Strömungskanal 13. An den Austrittsöffnungen 17 vermischt sich das durch den Kanal strömende Material mit dem austretenden Material, so dass in nachfolgende Eintrittsöffnungen 15 im gleich Strömungskanal 13 ein Gemisch eintritt, das einen höheren Anteil an nicht abreagiertem Kathodenmaterial enthält als das aus den Austrittöffnungen austretende Material.

In Figur 3 ist die erfindungsgemäße Elektrodeneinheit dreidimensional dargestellt, wobei die Abdeckung 11 zur Darstellung der darunterliegenden Bauelemente einen Ausschnitt aufweist. Dieser ist in der montierten Elektrodeneinheit 1 nicht vorhanden. In der Darstellung in Figur 3 lässt sich erkennen, dass die Austrittsöffnungen 17 versetzt zu den nachfolgenden Eintrittsöffnungen 15 angeordnet sind. Hierdurch wird vermieden, dass Material aus einer Austrittsöffnung 17 direkt in die nachfolgende Eintrittsöffnung 15 strömen kann. In der hier dargestellten Ausführungsform sind die Eintrittsöffnungen 15 und Austrittsöffnungen 17 jeweils mit einem rechteckigen Querschnitt gestaltet, wobei sich zwischen zwei Eintrittsöffnungen 15 beziehungsweise zwei Austrittsöffnungen 17 jeweils ein Fortsatz 33 der als Hülse gestalteten flächige Elektrode 9 befindet, der die gleiche Breite aufweist wie die nachfolgende Eintrittsöffnung 15 beziehungsweise die vorangehende Austrittsöffnung 17.

In der hier dargestellten Ausführungsform sind die flächigen Elektroden 9 als separate Hülsen gefertigt, die jeweils an einem Ende die Eintrittsöffnungen 15 und am anderen Ende die Austrittsöffnungen 17 aufweisen. Die Gestaltung in einzelnen Hülsen erlaubt eine leichtere Montage und Fertigung. Alternativ ist es jedoch auch möglich, nur eine Hülse vorzusehen, in die Eintrittsöffnungen 15 und Austrittsöffnungen 17 ausgebildet sind. Bevorzugt ist jedoch die Gestaltung mit separaten Hülsen, an deren Enden jeweils Eintrittsöffnungen 15 und Austrittsöffnungen 17 ausgebildet sind. In einer besonders bevorzugten Ausführungsform sind jeweils an einer Hülse die Eintrittsöffnungen 15 und die Austrittsöffnungen 17 axial fluchtend zueinander ausgebildet. Weiterhin ist es auch möglich, neben den hier dargestellten rechteckigen Eintrittsöffnungen 15 und Austrittöffnungen 17 die Eintrittsöffnungen und Austrittsöffnungen in jeder beliebigen anderen Form zu gestalten. So ist es zum Beispiel möglich, die Öffnungen in Form eines Halbkreises oder einer Halbellipse oder auch als Dreieck auszubilden, wenn die Öffnungen jeweils am Ende der Hülse sind. Wenn nur eine flächige Elektrode vorgesehen ist, in der mehrere Reihen an Eintrittsöffnungen 15 und Austrittsöffnungen 17 ausgebildet sind, so können diese auch in jeder beliebigen anderen Form, zum Beispiel elliptisch, kreisförmig, dreieckig oder polygonal mit beliebig vielen Ecken, ausgebildet sein.

Neben der hier dargestellten Ausführungsform mit zylinderförmigem Festelektrolyten 3 und damit ebenfalls zylindrischen porösen Elektroden 7, ist es auch möglich, die Elektrodeneinheit 1 mit jedem beliebigen anderen Querschnitt und auch als flächige Elektrodeneinheit zu gestalten. Bevorzugt ist die Elektrodeneinheit 1 jedoch zylinderförmig, wie sie hier dargestellt ist.

Um eine größere Länge der Elektrodeneinheit 1 zu realisieren, können auch mehr als die hier dargestellten zwei als Hülse ausgebildeten Segmentwände 9 vorgesehen sein.

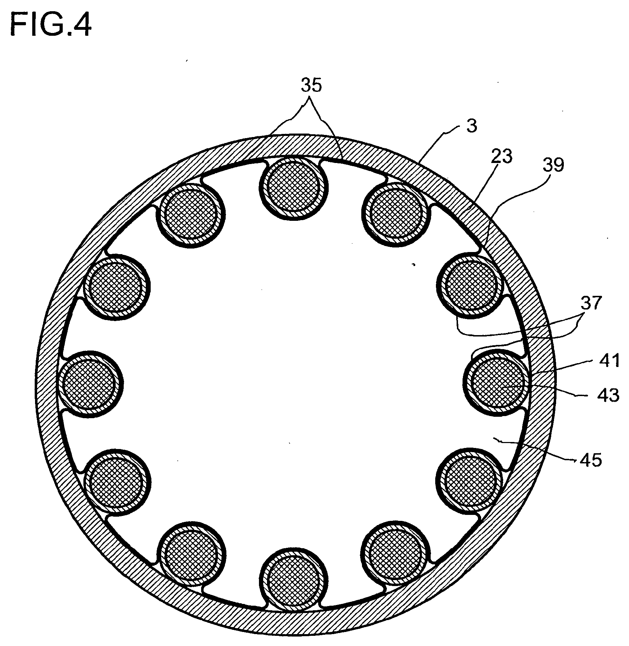

In Figur 4 ist eine Schnittdarstellung durch einen erfindungsgemäß ausgebildeten Verdränger dargestellt.

Bevorzugt wird der Verdränger 23 aus Edelstahl gefertigt. Um eine Beschädigung des Festelektrolyten 3 durch thermische Ausdehnung des Verdrängers 23 zu vermeiden, ist der Verdränger 23 vorzugsweise so gestaltet, dass dieser federnd am Festelektrolyten 3 anliegt. Das federnde Anliegen am Festelektrolyten kann zum Beispiel durch eine Gestaltung mit Vorsprüngen 35 und Rücksprüngen 37 realisiert werden. Dies führt zum Beispiel zu einer wellenförmigen Gestaltung des Verdrängers 23. Durch das federnde Anliegen des Verdrängers 23 können Fertigungsabweichungen der inneren Kontur des Festelektrolyten 3 und Unterschiede bei der thermischen Expansion ausgeglichen werden. Weiterhin ist es auch möglich, insbesondere, wenn zusätzliche Stromleiter 39 vorgesehen sind, die Rücksprünge 37 in Form eines Omega zu gestalten, in das die Stromleiter 39 mit kreisförmigem Querschnitt geklemmt werden.

In der hier dargestellten Ausführungsform weisen die Stromleiter 39 eine Hülle in Form eines beidseitig verschlossenen Rohres 41 und einen Kern 43 aus einem elektrisch gut leitenden Material auf. Der Kern 43 liegt dabei vollumfänglich am Rohr 41 an. Wie vorstehend bereits beschrieben ist das Rohr vorzugsweise aus einem Edelstahl gefertigt und der Kern aus Aluminium, Kupfer, Silber, Gold oder Natrium. Durch den Einsatz der Stromleiter 39 wird die elektrische Leitfähigkeit des aus vergleichsweise schlecht leitendem Edelstahl gefertigten Verdrängers 23 verbessert. Durch die Verwendung des Rohres 41 aus Edelstahl wird der Stromleiter 39 gegen Korrosion und für den Versagensfall des Festelektrolyten 3 gegen eine heftige Reaktion mit dem Kathodenmaterial geschützt.

Der Verdränger ist üblicherweise innen hohl. Der innere Bereich 45 des Verdrängers kann zum Beispiel zur Aufnahme eines Natrium enthaltenden Behälters genutzt werden. Der Behälter wird dabei vorzugsweise ebenfalls aus Edelstahl gefertigt.

Figur 5 zeigt eine Schnittdarstellung der flächigen Elektrode in einer Ausführungsform der Erfindung.

Der Festelektrolyt 3 ist von einer elektrisch isolierenden Schicht 5 und einer porösen Elektrode 7 umschlossen. An die poröse Elektrode 7 schließt sich die Abdeckung 11 an, die in der hier dargestellten Ausführungsform wellenförmig gestaltet ist. Durch die wellenförmige Gestaltung der Abdeckung 11 werden Strömungskanäle 13 gebildet, die von Schwefel und Polysulfid durchströmt werden.

Wenn die Abdeckung 11 aus einem Stahl gefertigt wird, ist es zur Verbesserung der elektrischen Eigenschaften notwendig, zusätzliche Stromleiter 47 vorzusehen. Die Stromleiter 47 werden dabei vorzugsweise auf der zum Festelektrolyten 3 weisenden Seite der Abdeckung 11 angeordnet. In der hier dargestellten Ausführungsform sind die Stromleiter 47 in Strömungskanälen 23 der flächigen Elektrode aufgenommen. Hierbei sind die Geometrien von Strömungskanälen 23 und Stromleitern 47 so aneinander angepasst, dass ein Stromleiter 47 jeweils vollflächig an der Wandung eines Strömungskanals 13 anliegt. Um eine unerwünschte Reaktion des Stromleiters mit dem Schwefel beziehungsweise Polysulfid zu vermeiden, ist der Stromleiter 47 wie der auf der Verdrängerseite angeordnete Stromleiter 39 mit einer Hülle eines beidseitig verschlossenen Edelstahlrohres 49 und einem Kern 51 aus einem elektrisch gut leitfähigen Material gefertigt. Das elektrisch gut leitfähige Material ist vorzugsweise Kupfer, Aluminium, Silber oder Gold, besonders bevorzugt Kupfer oder Aluminium.

Neben einer Anordnung in jedem zweiten Strömungskanal 13, wie sie hier dargestellt ist, ist auch eine beliebige andere gleichmäßige oder ungleichmäßige Verteilung der Stromleiter 39 möglich. So ist es zum Beispiel bei einer gleichmäßigen Verteilung auch möglich, die Stromleiter nur in jedem dritten oder in jedem vierten Strömungskanal 13 vorzusehen.

Neben der hier dargestellten Ausführungsform ist es weiterhin auch möglich, Stromleiter an der dem Festelektrolyten 3 abgewandten Seite der Abdeckung 11 anzuordnen. In diesem Fall ist es bevorzugt, das elektrisch gut leitende Material direkt mit dem Material der Abdeckung 11 zu kontaktieren, beispielsweise durch eine Beschichtung oder auch durch eine Klemmverbindung eines Drahtes aus dem elektrisch gut leitenden Material in einem dem Festelektrolyten 3 abgewandten Wellental der wellenförmig gestalteten Abdeckung 11. Um eine Reaktion des elektrisch gut leitenden Materials mit Schwefel oder Polysulfid zu verhindern, umschließt in diesem Fall eine hier nicht dargestellte Abdeckung die flächige Elektrode und damit auch das elektrisch gut leitende Material. Als Material für die Abdeckung wird dabei vorzugsweise das gleiche Material gewählt wie für die Abdeckung 11.

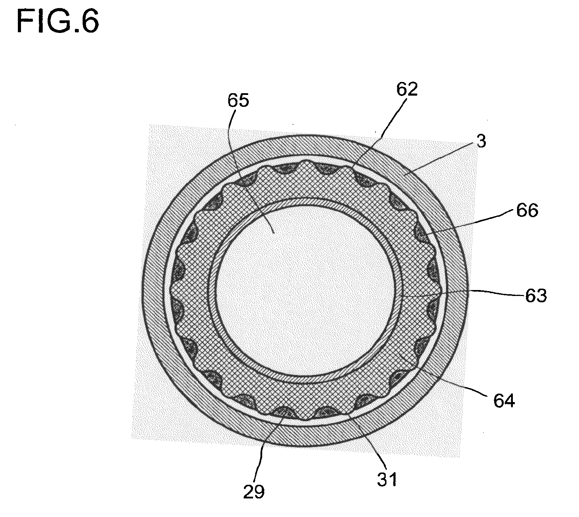

In Figur 6 ist ein Verdränger in einer zweiten Ausführungsform dargestellt. Hierbei umfasst der Verdränger eine äußere Hülle 62 aus einem Edelstahl, wobei die äußere Hülle federnd am Festelektrolyten 3 anliegt. Hierzu ist die äußere Hülle in der hier dargestellten Ausführungsform wellenförmig ausgebildet und weist abwechselnd Wellentäler 29 und Wellenberge 31 auf. Diese Form der äußeren Hülle eignet sich zum Ausgleich von Fertigungsabweichungen der inneren Kontur des Festelektrolyten und von Unterschieden bei der thermischen Expansion. Auf der Innenseite schließen sich an die äußere Hülle 62 ein Kern 64 aus einem Nichteisenmetall und eine innere Hülle 63 aus Edelstahl an. Der Kern kann dabei zum Beispiel bei der Herstellung zwischen die innere Hülle 63 und die äußere Hülle 62 gegossen werden. Dies erfolgt vorzugsweise innerhalb des Festelektrolyten 3, damit der Verdränger 23 an die Kontur des Festelektrolyten 3 angepasst wird. Als Nichteisenmetall für den Kern 64 eignen sich zum Beispiel Aluminium, Zink, Kupfer oder Legierungen, die mindestens eines dieser Metalle enthalten. Bevorzugt ist es weiterhin, wenn bei dem in Figur 6 dargestellten Verdränger der Kern 64 zur Stromzuführung genutzt wird.

In die Wellentäler 29 sind in der in Figur 6 dargestellten Ausführungsform Profilschienen 66 eingebracht. Durch die Profilschienen 66 wird das freie Volumen zwischen Festelektrolyt 3 und Verdränger 23 vermindert, so dass der Raum, den das flüssige Alkalimetall einnehmen kann, weiter verringert wird.

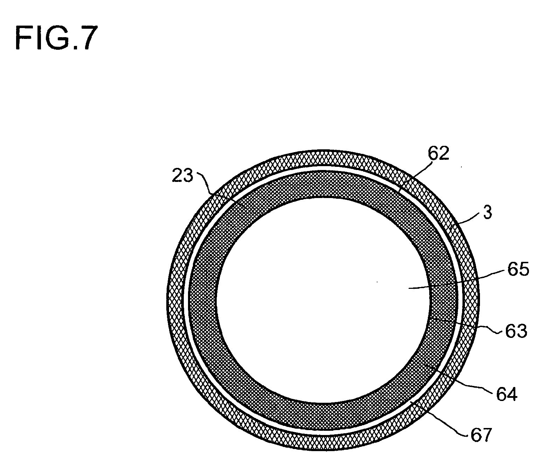

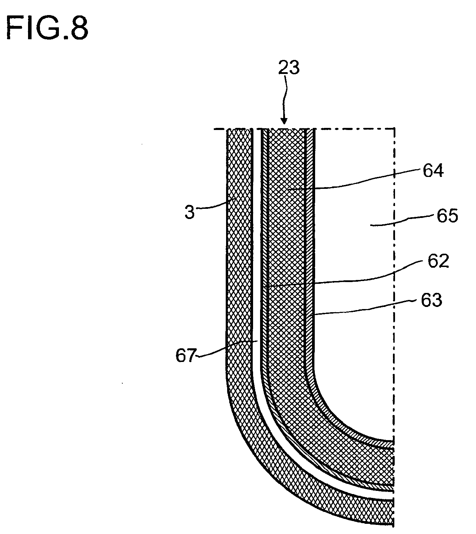

In den Figuren 7 und 8 ist ein Verdränger in einer weiteren Ausführungsform dargestellt. Der Verdränger 3 umfasst eine äußere Hülle 62, eine innere Hülle 63 und einen Kern 64. Die äußere Hülle 62 und die innere Hülle 63 sind aus einem Edelstahl oder Graphit gefertigt. Als Material für den Kern 64 wird ein Nichteisenmetall eingesetzt. Zur Herstellung des Verdrängers 23 wird zur Bildung der äußeren Hülle 62 ein Stahlblechmantel aus einem Edelstahlblech oder einer Edelstahlfolie so gefertigt, dass dieser mit Untermaß in die Innenkontur des Festelektrolyten 3 passt. In den vom Stahlblechmantel gebildeten Innenraum wird konzentrisch zur Bildung der inneren Hülle 63 ein Stahlblechinnenkörper eingebracht. Der Stahlblechinnenkörper kann dabei genauso aufgebaut sein wie der Stahlblechmantel für die äußere Hülle 62. In den Raum zwischen dem Stahlblechmantel und dem Stahlblechinnenkörper wird unter Druck das Nichteisenmetall, vorzugsweise Aluminium, Zink oder eine Legierung, die mindestens eines dieser Metalle enthält, eingegossen, wodurch der Kern 64 gebildet wird. Aufgrund des Drucks wird der Stahlblechmantel an die Innenkontur des Festelektrolyten 3 gedrückt und passt sich so der Form des Festelektrolyten 3 an, so dass Fertigungsabweichungen ausgeglichen werden.

Nach dem Ausgießen erstarrt das Nichteisenmetall und kühlt sich anschließend weiter ab. Aufgrund unterschiedlicher Schrumpfung beim Abkühlen bildet sich ein definierter minimaler Schrumpfspalt 67 zwischen dem Festelektrolyten 3 und der äußeren Hülle 62, so dass nur wenig Platz für das Alkalimetall verbleibt. Die Stromzufuhr erfolgt bei dieser Ausführungsform ebenso wie bei der in Figur 6 dargestellten Ausführungsform vorzugsweise über den Kern 64.

Alternativ zum Ausgießen des Zwischenraumes zwischen dem Stahlblechmantel für die äußere Hülle 62 und dem Stahlblechinnenkörper für die innere Hülle 63 ist es auch möglich, zunächst den Stahlblechmantel für die äußere Hülle 62 in den Festelektrolyten 3 einzulegen und einen Hohlkörper beispielsweise aus einer warmfesten Aluminiumlegierung einzulegen. Der Hohlkörper aus der warmfesten Aluminiumlegierung entspricht dabei ebenfalls der Innengeometrie des Festelektrolyten, weist jedoch gegenüber dem Stahlblechmantel für die äußere Hülle 62 ein Untermaß auf.

Bei einer Temperatur unterhalb der Schmelztemperatur des Hohlkörpers, bei der das Material des Hohlkörpers jedoch plastisch verformbar ist, wird der Hohlkörper durch inneren Überdruck und die dadurch ausgelöste plastische Verformung an die Innenwand des Festelektrolyten angepasst. Hierdurch werden Fertigungsungenauigkeiten von der Idealkontur des Festelektrolyten 3 ausgeglichen. Der Stahlblechmantel wird durch das Einpressen des Hohlkörpers an die Innenkontur des Festelektrolyten 3 gepresst und damit an diese angepasst. Beim Abkühlen bildet sich aufgrund unterschiedlicher thermischer Kontraktion ein definierter mininmaler Schrumpfspalt 67 zwischen der Innenkontur des Festelektrolyten 3 und dem die äußere Hülle 62 bildenden Stahlblechmantel aus. Hierdurch wird der Raum für das flüssige Alkalimetall minimal gehalten. Die Stromzufuhr erfolgt vorzugsweise über den den Kern 64 bildenden Hohlkörper.

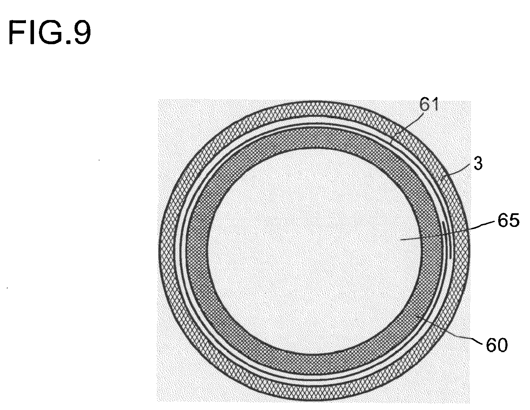

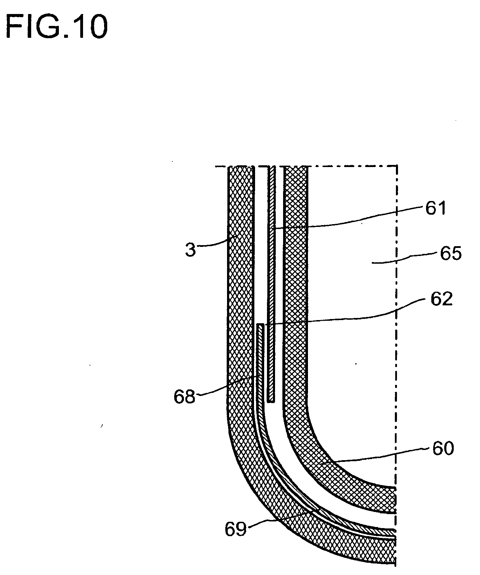

Eine weitere Möglichkeit zur Herstellung des Verdrängers 23 ist in den Figuren 9 und 10 dargestellt.

Der Aufbau des fertigen Verdrängers 23 entspricht im Wesentlichen dem des in den Figuren 7 und 8 dargestellten. Allerdings wird zur Herstellung der äußeren Hülle kein geschlossener Stahlblechmantel eingesetzt sondern ein zylinderförmig gebogenes Blech 61 aus Edelstahl, beispielsweise aus einer Edelstahlfolie. Das zylinderförmig gebogene Blech 61 weist eine offene Längsnaht auf, an der dieses mit seinen Kanten überlappt. Hierdurch wird eine Anpassung an die Innenkontur des Festelektrolyten 3 möglich. Die Bodenkappe, mit der der Verdränger 23 nach unten abgeschlossen wird, kann Teil des zylinderförmig gebogenen Blechs 61 sein oder ein eigenständiges Bauteil, wie in Figur 10 dargestellt. In diesem Fall weist der Boden 69 einen nach oben weisenden Rand 68 auf, der das zylinderförmig gebogene Blech 61 umschließt. Die Abmessungen von zylinderförmig gebogenem Blech 61 und Boden 69 sind ähnlich der Innenkontur des Festelektrolyten 3, haben gegenüber dieser jedoch ein Übermaß. Zur Herstellung des Verdrängers wird das zylinderförmig gebogene Blech 61 und gegebenenfalls der davon separate Boden 69 in den Festelektrolyten 3 so eingelegt, dass sich zylinderförmig gebogenes Blech 61 und gegebenenfalls der Boden 69 federnd an die Innenkontur des Festelektrolyten 3 anlegen. Danach wird ein Hohlkörper 60 vorzugsweise aus einer warmfesten Aluminiumlegierung eingelegt, der eine ähnliche Geometrie wie die Innenkontur des Festelektrolyten 3 aufweist, gegenüber dieser jedoch ein Untermaß aufweist. Bei einer Temperatur, bei der das Material des Hohlkörpers 60 plastisch verformbar ist, die aber noch unterhalb der Schmelztemperatur des Materials des Hohlkörpers 60 liegt, wird der Hohlkörper 60 durch inneren Überdruck und die dadurch ausgelöste plastische Verformung an die Innenkontur des Festelektrolyten angepasst. Das zwischen dem Hohlkörper 60 liegende zylinderförmig gebogene Blech 61 und gegebenenfalls der Boden 69 werden dabei gegen die Innenkontur des Festelektrolyten 3 gepresst und können sich so an diese anpassen. Beim Abkühlen bildet sich aufgrund unterschiedlicher Kontraktion ein Schrumpfspalt aus, so dass nur wenig Raum für das Alkalimetall verbleibt. Gleichzeitig verschließt sich durch das Anpressen auch der Spalt im zylinderförmig gebogenen Blech 61, so dass beim fertigen Verdränger 23 kein Alkalimetall in Kontakt mit dem Material des den Kern 64 bildenden Hohlkörpers 60 kommt. Die Stromzufuhr erfolgt vorzugsweise ebenso wie bei den vorstehend beschriebenen Ausführungsformen über den Kern 64 aus dem Nichteisenmetall oder einer das Nichteisenmetall enthaltenden Legierung.

### Bezugszeichenliste

- 1: Elektrodeneinheit
- 3: Festelektrolyt
- 5: hinsichtlich Elektronenleitung isolierende Schicht
- 7: poröse Elektrode
- 9: Segmentwand
- 11: Abdeckung
- 13: Strömungskanal
- 15: Eintrittsöffnung
- 17: Austrittsöffnung
- 19: Strömungssperre
- 21: Stromanschluss
- 23: Verdränger
- 25: Spalt
- 27: Kanal
- 29: Wellental
- 31: Wellenberg
- 33: Fortsatz
- 35: Vorsprung
- 37: Rücksprung
- 39: Stromleiter
- 41: Rohr
- 43: Kern
- 45: innerer Bereich des Verdrängers 23
- 47: Stromleiter
- 49: Edelstahlrohr
- 51: Kern
- 60: Hohlkörper
- 61: zylinderförmig gebogenes Blech
- 62: äußere Hülle
- 63: innere Hülle
- 64: Kern
- 65: Innenraum
- 66: Profilschiene
- 67: Schrumpfspalt
- 68: nach oben gebogener Rand
- 69: Boden

## Patentansprüche

1. Elektrodeneinheit für eine elektrochemische Vorrichtung, umfassend einen Festelektrolyten (3) sowie eine poröse Elektrode (7), wobei der Festelektrolyt (3) einen Raum für Kathodenmaterial und einen Raum für Anodenmaterial trennt und die poröse Elektrode (7) flächig mit dem Festelektrolyten (3) verbunden ist, wobei in dem Raum für Anodenmaterial ein Verdränger (23) aufgenommen ist, **dadurch gekennzeichnet, dass** der Verdränger eine äußere Hülle (62) aus Edelstahl oder Graphit und einen Kern (64) aus einem Nichteisenmetall umfasst, wobei das Nichteisenmetall bei einer Temperatur warmplastisch verformbar ist, die niedriger liegt als die Temperatur, bei der der Edelstahl warmplastisch verformbar ist, und wobei zur Herstellung des Verdrängers (23) die Hülle (62) aus Edelstahl oder Graphit durch Einbringen und Erwärmen des Nichteisenmetalls an den Festelektrolyten (3) gepresst wird und sich beim Abkühlen ein Spalt zwischen Festelektrolyt (3) und Hülle (62) aus Edelstahl oder Graphit bildet.

2. Elektrodeneinheit gemäß Anspruch 1, **dadurch gekennzeichnet, dass** die äußere Hülle einen Boden (69) umfasst, der mit einem nach oben gebogenen Rand (68) das zylinderförmig gebogene Blech (61) umschließt oder der von dem zylinderförmig gebogenen Blech (61) umschlossen wird, so dass der Boden (69) bei der Herstellung des Verdrängers (23) relativ zur äußeren Hülle beweglich ist.

3. Elektrodeneinheit gemäß Anspruch 1 oder 2, **dadurch gekennzeichnet, dass** der Verdränger (23) als Hohlkörper aufgebaut ist mit einer inneren (63) und einer äußeren Hülle (62) aus Edelstahl sowie einem dazwischenliegenden Kern (64) aus dem Nichteisenmetall.

4. Elektrodeneinheit gemäß einem der Ansprüche 1 bis 3, **dadurch gekennzeichnet, dass** das Nichteisenmetall Zink, Aluminium oder eine mindestens eines dieser Metalle enthaltende Legierung ist.

5. Elektrodeneinheit gemäß einem der Ansprüche 1 bis 4, **dadurch gekennzeichnet, dass** die äußere Hülle (62) aus Edelstahl oder Graphit eine flexible Folie ist oder ein zylinderförmig gebogenes Blech (61) umfasst, dessen Kanten in axialer Richtung überlappen.

6. Elektrodeneinheit gemäß einem der Ansprüche 1 bis 5, **dadurch gekennzeichnet, dass** der Verdränger (23) Mittel zur Stromleitung (39) umfasst.

7. Elektrodeneinheit gemäß Anspruch 6, **dadurch gekennzeichnet, dass** die Mittel zur Stromleitung (39) ein beidseitig verschlossenes Edelstahlrohr (41) mit einem Kern (43) aus einem elektrisch gut leitenden Material umfassen und in Rücksprüngen (37) des Verdrängers (23) angeordnet sind oder dass die Mittel zur Stromleitung eine Beschichtung aus einem elektrisch gut leitenden Material auf der Innenseite des Verdrängers (23) umfassen.

8. Elektrodeneinheit gemäß Anspruch 7, **dadurch gekennzeichnet, dass** die ein beidseitig verschlossenes Edelstahlrohr (41) mit einem Kern (43) aus einem elektrisch gut leitenden Material umfassenden Mittel zur Stromleitung (39) in die Rücksprünge (37) geklemmt sind.

9. Elektrodeneinheit gemäß Anspruch 7 oder 8, **dadurch gekennzeichnet, dass** das elektrisch gut leitende Material ausgewählt ist aus der Gruppe bestehend aus Kupfer, Aluminium, Silber, Gold, Natrium, sowie Mischungen und Legierungen, die mindestens eins dieser Metalle enthalten.

10. Elektrodeneinheit gemäß einem der Ansprüche 1 bis 9, **dadurch gekennzeichnet, dass** der Festelektrolyt (3) zylinderförmig ausgebildet ist und die poröse Elektrode (7) den Festelektrolyten (3) umschließt, wobei der Raum für das Anodenmaterial von dem Festelektrolyten (3) umschlossen ist.

11. Elektrodeneinheit gemäß einem der Ansprüche 1 bis 10 **dadurch gekennzeichnet, dass** in dem Verdränger (23) ein Kanal (27) ausgebildet ist, durch den das Anodenmaterial zugeführt wird.

12. Elektrodeneinheit gemäß einem der Ansprüche 1 bis 11, **dadurch gekennzeichnet, dass** der Festelektrolyt (3) aus β"-Aluminiumoxid gefertigt ist.

13. Elektrodeneinheit gemäß einem der Ansprüche 1 bis 12, **dadurch gekennzeichnet, dass** das Anodenmaterial ein Alkalimetall ist.

14. Elektrodeneinheit gemäß einem der Ansprüche 1 bis 13, **dadurch gekennzeichnet, dass** das Kathodenmaterial Schwefel oder Polysulfid ist.

15. Verwendung der Elektrodeneinheit gemäß einem der Ansprüche 1 bis 14 in einer Vorrichtung zur Speicherung elektrischer Energie oder in einer Elektrolysezelle.

16. Verwendung der Elektrodeneinheit gemäß Anspruch 15, **dadurch gekennzeichnet, dass** die Vorrichtung zur Speicherung elektrischer Energie oder die Elektrolysezelle ein flüssiges Alkalimetail und Schwefel oder Polysulfid als Elektrolyten enthält.

## Claims

1. An electrode unit for an electrochemical device, comprising a solid electrolyte (3) and a porous electrode (7), the solid electrolyte (3) dividing a compartment for cathode material and a compartment for anode material and the porous electrode (7) being extensively connected to the solid electrolyte (3), with a displacer (23) being accommodated in the anode material compartment, wherein the displacer comprises an outer shell (62) of stainless steel or graphite, and a core (64) of a nonferrous metal, the nonferrous metal being thermoplastically deformable at a temperature which is lower than the temperature at which the stainless steel is thermoplastically deformable, and where for production of the displacer (23) the shell (62) of stainless steel or graphite is pressed onto the solid electrolyte (3) by introduction and heating of the nonferrous metal, and on cooling forms a gap between solid electrolyte (3) and shell (62) of stainless steel or graphite.

2. The electrode unit according to claim 1, wherein the outer shell comprises a base (69) which, with an upwardly bent edge (68), surrounds the cylindrically bent metal sheet (61) or is surrounded by the cylindrically bent metal sheet (61), so that the base (69) is movable relative to the outer shell for the production of the displacer (23).

3. The electrode unit according to claim 1 or 2, wherein the displacer (23) is constructed as a hollow body having an inner shell (63) and an outer shell (62) of stainless steel and also, between them, a core (64) of the nonferrous metal.

4. The electrode unit according to one of claims 1 to 3, wherein the nonferrous metal is zinc, aluminum or an alloy comprising at least one of these metals.

5. The electrode unit according to one of claims 1 to 4, wherein the outer shell (62) of stainless steel or graphite is a flexible sheet or comprises a cylindrically bent metal sheet (61) whose edges overlap in axial direction.

6. The electrode unit according to one of claims 1 to 5, wherein the displacer (23) comprises current conducting means (39).

7. The electrode unit according to claim 6, wherein the current conducting means (39) comprise a special steel tube (41) closed at both ends and with a core (43) of an electrically highly conductive material and are arranged in recesses (37) of the displacer (23) or wherein the current conducting means comprise a coating of an electrically highly conductive material on the inside of the displacer (23).

8. The electrode unit according to claim 7, wherein the current conducting means (39) comprising a special steel tube (41) closed at both ends and with a core (43) of an electrically highly conductive material are clamped in the recesses (37).

9. The electrode unit according to claim 7 or 8, wherein the electrically highly conductive material is selected from the group consisting of copper, aluminum, silver, gold, sodium, and also mixtures and alloys comprising at least one of these metals.

10. The electrode unit according to one of claims 1 to 9, **characterized in that** the solid electrolyte (3) is of cylindrical design and the porous electrode (7) surrounds the solid electrolyte (3), the compartment for the anode material being surrounded by the solid electrolyte (3).

11. The electrode unit according to one of claims 1 to 10, wherein a channel (27) is formed in the displacer (23) and the anode material is supplied through said channel (27).

12. The electrode unit according to one of claims 1 to 11, wherein the solid electrolyte (3) is made from β"-alumina.

13. The electrode unit according to one of claims 1 to 12, wherein the anode material is an alkali metal.

14. The electrode unit according to one of claims 1 to 13, wherein the cathode material is sulfur or polysulfide.

15. The use of the electrode unit according to one of claims 1 to 14 in an apparatus for storing electrical energy or in an electrolysis cell.

16. The use of the electrode unit according to claim 15, wherein the apparatus for storing electrical energy or the electrolysis cell comprises a liquid alkali metal and sulfur or polysulfide as electrolytes.

## Revendications

1. Unité d'électrode pour un dispositif électrochimique, comprenant un électrolyte solide (3) ainsi qu'une électrode poreuse (7), l'électrolyte solide (3) séparant un espace pour du matériau de cathode et un espace pour du matériau d'anode et l'électrode poreuse (7) étant reliée à plat avec l'électrolyte solide (3), un organe de refoulement (23) étant logé dans l'espace pour du matériau d'anode, **caractérisée en ce que** l'organe de refoulement comprend une enveloppe extérieure (62) en acier inoxydable ou en graphite et un noyau (64) en un métal non ferreux, le métal non ferreux pouvant être façonné par effet thermoplastique à une température qui est inférieure à la température à laquelle l'acier inoxydable peut être façonné par effet thermoplastique et, pour fabriquer l'organe de refoulement (23), l'enveloppe (62) en acier inoxydable ou en graphite étant compressée par introduction et échauffement du métal non ferreux au niveau de l'électrolyte solide (3) et un entrefer se formant entre l'électrolyte solide (3) et l'enveloppe (62) en acier inoxydable ou en graphite lors du refroidissement.

2. Unité d'électrode selon la revendication 1, **caractérisée en ce que** l'enveloppe extérieure comprend un fond (69) qui entoure la tôle (61) cintrée en forme de cylindre avec un bord (68) cintré vers le haut ou qui est entouré par la tôle (61) cintrée en forme de cylindre, de sorte que le fond (69) est mobile par rapport à l'enveloppe extérieure lors de la fabrication de l'organe de refoulement (23).

3. Unité d'électrode selon la revendication 1 ou 2, **caractérisée en ce que** l'organe de refoulement (23) est réalisé sous la forme d'un corps creux pourvu d'une enveloppe intérieure (63) et d'une enveloppe extérieure (62) en acier inoxydable ainsi qu'un noyau (64) en le métal non ferreux disposé entre celles-ci.

4. Unité d'électrode selon l'une des revendications 1 à 3, **caractérisée en ce que** le métal non ferreux est du zinc, de l'aluminium ou un alliage contenant au moins l'un de ces métaux.

5. Unité d'électrode selon l'une des revendications 1 à 4, **caractérisée en ce que** l'enveloppe extérieure (62) en acier inoxydable ou en graphite comprend un film flexible ou une tôle (61) cintrée en forme de cylindre dont les bords se chevauchent dans le sens axial.

6. Unité d'électrode selon l'une des revendications 1 à 5, **caractérisée en ce que** l'organe de refoulement (23) comprend des moyens de conduction du courant (39).

7. Unité d'électrode selon la revendication 6, **caractérisée en ce que** les moyens de conduction du courant (39) comprennent un tube en acier inoxydable (41) fermé des deux côtés pourvu d'un noyau (43) en un matériau bon conducteur d'électricité et sont disposés dans des retraits (37) de l'organe de refoulement (23), ou **en ce que** les moyens de conduction du courant comprennent un revêtement en un matériau bon conducteur d'électricité sur le côté intérieur de l'organe de refoulement (23).

8. Unité d'électrode selon la revendication 7, **caractérisée en ce que** les moyens de conduction du courant (39) comprenant un tube en acier inoxydable (41) fermé des deux côtés pourvu d'un noyau (43) en un matériau bon conducteur d'électricité sont coincés dans les retraits (37).

9. Unité d'électrode selon la revendication 7 ou 8, **caractérisée en ce que** le matériau bon conducteur d'électricité est choisi dans le groupe composé de cuivre, d'aluminium, d'argent, d'or, de sodium ainsi que de mélanges et d'alliages qui contiennent au moins l'un de ces métaux.

10. Unité d'électrode selon l'une des revendications 1 à 9, **caractérisée en ce que** l'électrolyte solide (3) est de configuration cylindrique et l'électrode poreuse (7) entoure l'électrolyte solide (3), l'espace pour le matériau d'anode étant entouré par l'électrolyte solide (3).

11. Unité d'électrode selon l'une des revendications 1 à 10, **caractérisée en ce que** dans l'organe de refoulement (23) est formé un canal (27) à travers lequel est acheminé le matériau d'anode.

12. Unité d'électrode selon l'une des revendications 1 à 11, **caractérisée en ce que** l'électrolyte solide (3) est fabriqué en oxyde d'aluminium ß".

13. Unité d'électrode selon l'une des revendications 1 à 12, **caractérisée en ce que** le matériau d'anode est un métal alcalin.

14. Unité d'électrode selon l'une des revendications 1 à 13, **caractérisée en ce que** le matériau de cathode est du soufre ou du polysulfure.

15. Utilisation de l'unité d'électrode selon l'une des revendications 1 à 14 dans un dispositif d'accumulation d'énergie électrique ou dans une cellule à électrolyse.

16. Utilisation d'une unité d'électrode selon la revendication 15, **caractérisée en ce que** le dispositif d'accumulation d'énergie électrique ou la cellule à électrolyse contient un métal alcalin liquide et du soufre ou du polysulfure en tant qu'électrolyte.
